# EUROPÄISCHE PATENTANMELDUNG

(11) **EP 3 905 602 A1**
(43) Veröffentlichungstag der Anmeldung: **03.11.2021**
(21) Anmeldenummer: 20171787.3
(22) Anmeldetag: 28.04.2020
(51) Int. Cl.: H04L 12/40

(54) **VERFAHREN ZUM BETRIEB EINES KOMMUNIKATIONSSYSTEMS ZUR ÜBERMITTLUNG ZEITKRITISCHER DATEN UND STEUERUNGSEINRICHTUNG**

(71) Anmelder: Siemens Aktiengesellschaft, 80333 München (DE)
(72) Erfinder: Kießling, Marcel, 91235 Velden (DE)

(57) **Zusammenfassung**

In einem Kommunikationssystems zur Übermittlung zeitkritischer Daten werden ausgewählte Datagramme (300) Datenströmen zugeordnet und zwischen ersten Kommunikationsgeräten (201) und zweiten Kommunikationsgeräten (202, 211-213) über zumindest die ersten und zweiten Kommunikationsgeräte umfassende Pfade innerhalb vorgegebener periodischer Zeitintervalle übermittelt. Bei Reservierungsanfragen (401) wird für die Datenströme jeweils ein Zeitfenster (301-303) innerhalb der vorgegebenen Zeitintervalle zur Datenübermittlung sowie eine dem jeweiligen Datenstrom zugeordnete Reihenfolgeposition innerhalb einer dem ermittelten Zeitfenster zugeordneten Sendeliste (211) des jeweiligen ersten Kommunikationsgeräts ermittelt. Die Zeitfenster weisen jeweils eine individuelle Zyklusdauer (RR) auf, die ein Vielfaches einer allgemeinen Zyklusdauer (T1) ist oder der allgemeinen Zyklusdauer entspricht. Die Reihenfolgepositionen wird jeweils durch eine relative und/oder aktualisierte absolute Positionsangabe (POS) in Bezug auf bestehende Einträge innerhalb der jeweiligen Sendeliste gekennzeichnet.

## Beschreibung

Die vorliegende Erfindung betrifft ein Verfahren zum Betrieb eines Kommunikationssystems zur Übermittlung zeitkritischer Daten, insbesondere Steuerungsdaten in einem industriellen Automatisierungssystem, sowie eine Steuerungseinrichtung zur Durchführung eines solchen Verfahrens.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Eine priorisierte Übermittlung von Datenrahmen ist beispielsweise auf Grundlage von virtuellen lokalen Netzen bzw. Virtual Local Area Networks (VLAN) entsprechend Standard IEEE 802.1Q grundsätzlich mittels entsprechender in Datenrahmen eingefügter Tags möglich. Zur synchronisierten und priorisierten Übertragung von Audio- und Videodatenströmen (Audio/ Video Bridging) über Kommunikationsnetze ist eine Bandbreitenreservierung für einzelne Kommunikationsverbindungen vorgesehen, denen eine höchste Priorität zugeordnet ist. Für eine Übertragung von Audio- und Videodatenströmen benötigte Ressourcen werden dabei in Kommunikationsgeräten wie Switches reserviert. Eine Weiterleitung hochpriorisierter Datenrahmen erfolgt jedoch erst nach einer erfolgreichen Reservierung. Im Rahmen einer Bandbreitenüberwachung wird sichergestellt, dass hinsichtlich tatsächlich genutzter Bandbreite ausreichend reservierte Bandbreite vorliegt. Eine Kommunikationsverbindung, die mehr Bandbreite nutzt als reserviert ist, würde ansonsten zu einer Störung eines gesamten Kommunikationsnetzes führen, im ungünstigsten Fall zu dessen Stillstand aufgrund Überlastung.

Für die gesicherte Übertragung von Audio- und Videodatenströmen über Ethernet-basierte Kommunikationsnetze sind entsprechend Standard IEEE 802.1 Qav sind Credit-based Shaper (CBS) als Maß für eine Bandbreitenüberwachung definiert worden. Durch Credit-based Shaper wird nach jedem übertragenen Datenrahmen eine Übertragungspause definiert, um eine Bandbreitenbegrenzung in Bezug auf eine reservierte Bandbreite sicherzustellen. Derartige Zwangspausen sind jedoch in industriellen Automatisierungssystemen bei einer Übertragung von vielen Datenrahmen mit geringem Nutzdateninhalt für Steuerungsdaten, die eher als Datenbündel bzw. Bursts anzusehen sind, äußerst problematisch.

Entsprechend EP 3 038 325 A1 werden zur Datenübermittlung in einem Kommunikationsnetz eines industriellen Automatisierungssystems erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt. Zweite Datenrahmen, die Sequenzen von Datenrahmen umfassenden Datenströmen zugeordnet sind, bzw. dritte Datenrahmen, für deren Übermittlung keine oder eine unter einem vorgegebenen Schwellwert liegende Dienstgüte festgelegt ist, werden innerhalb periodischer zweiter Zeitintervalle übermittelt. Die ersten Zeitintervalle sind in erste und zweite Teilintervall unterteilt. Weiterzuleitende erste Datenrahmen werden Teilintervall-alternierend in eine erste bzw. zweite Warteschlange eingefügt und alternierend aus den Warteschlangen für eine Weiterleitung entnommen.

In WO 2019/001718 A1 ist ein Verfahren zur Datenübermittlung beschrieben, das eine Kombination von geschützter Kommunikation und geringem Netzwerk-Konfigurationsaufwand ermöglicht. Dabei werden bei einer Reservierung von Ressourcen zur Übermittlung von Datenströmen (Streams) von einem Sender zu einem Empfänger zumindest zwei zumindest abschnittsweise redundante Pfade reserviert. Durch Erweiterung eines Reservierungsprotokolls wird eine automatische Konfiguration von Duplikatefiltern an redundanten Pfadabschnitten zugeordneten Netzknoten während einer Ressourcenreservierung vorgenommen.

Aus der älteren europäischen Patentanmeldung mit dem Anmeldeaktenzeichen 18210084.2 ist ein Kommunikationssystem zur Übermittlung zeitkritischer Daten bekannt, bei dem ausgewählte Datagramme Datenströmen zugeordnet und über Pfade für die Datenströme übermittelt werden. Reservierungsanfragen, die jeweils zumindest Angaben zu einem ersten und zweiten Netzknoten und Dienstgüteparameter umfassen, werden zur Reservierung von durch Kommunikationsgeräte für eine Übertragung von Datenströmen bereitzustellenden Ressourcen jeweils durch eine Reservierungsfunktionskomponente, die einem ersten oder zweiten Kommunikationsendgerät oder einem mit diesem verbundenen Datagramme weiterleitenden Kommunikationsgerät zugeordnet ist, an eine übergeordnete Kommunikationssteuerungseinrichtung übermittelt. Die übergeordnete Kommunikationssteuerungseinrichtung ermittelt bei Reservierungsanfragen jeweils einen Pfad und überprüft, ob in Kommunikationsgeräten entlang des jeweiligen Pfades ausreichende Ressourcen für die Übertragung der Datenströme unter Einhaltung der spezifizierten Dienstgüteparameter verfügbar sind, und ermittelt für ausgewählte Kommunikationsgeräte eine vorgeschlagene lokale Zyklusdauer.

Zur Abbildung unterschiedlichen Anwendungszyklen in industriellen Automatisierungssystemen sind in Ethernet-basierten Kommunikationsnetzen zur deterministischen, zyklischen Datenübermittlung zusätzlich zu einem allgemeinen Netzwerkzyklus eine Takt-Untersetzung (Reduction Ratio) vorgesehen. Neben der Takt-Untersetzung ist für die Anwendungszyklen ihre Phasenlage innerhalb des Netzwerkzyklus kennzeichnend. Durch Takt-Untersetzung ist es insbesondere möglich, in einem Kommunikationsnetz einen Betrieb von Geräten mit geringen Bandbreitenanforderungen mit einem Betrieb von Geräten mit hohen Bandbreitenanforderungen zu kombinieren. Auf diese Weise können erheblich mehr Geräte unter Berücksichtigung der jeweiligen Bandbreitenanforderungen in einem Kommunikationsnetz betrieben werden als ohne Takt-Untersetzung.

Entsprechend IEC/IEEE 60802 können insbesondere Kommunikationsgeräte bei einer Network Management Engine (NME) eine Reservierung von durch Bridges bzw. Switches entlang von Pfaden für Datenströme bereitzustellenden Ressourcen anfordern. Bei ausreichenden Ressourcen für bestehende und zusätzlich einzurichtende Datenströme sowie unter Berücksichtigung für die Datenströme spezifizierter Dienstgüteparameter, insbesondere Latenzen, richtet die Network Management Engine insbesondere die Bridges bzw. Switches entlang der Pfade für die Datenströme ein.

Darüber hinaus teilt die Network Management Engine den Kommunikationsendgeräten auf erfolgreiche Reservierungsanforderungen jeweils die Takt-Untersetzung und Phasenlage mit. Bei Kommunikationsendgeräten, von denen mehrere Datenströme ausgesehen, übermittelt die Network Management Engine zusätzlich eine Sequenznummer, durch die eine Position eines Datenstroms innerhalb einer Sendereihenfolge des jeweiligen Kommunikationsendgeräts festgelegt wird. Sind die Sendereihenfolgen aufgrund topologischer Änderungen oder infolge begrenzt zur Verfügung stehender Sequenznummern ungünstig festgelegt, können sich unerwünscht hohe Latenzen bzw. ineffizient ausgenutzte Systemressourcen in einem Kommunikationsnetz ergeben. Dies führt letztlich dazu, dass für weniger Datenströme Ressourcen reserviert werden können.

Der vorliegenden Erfindung liegt die Aufgabe zugrunde, ein Verfahren zum Betrieb eines Kommunikationssystems zur Übermittlung zeitkritischer Daten schaffen, das sowohl eine effiziente Ausschöpfung zur Verfügung stehender Systemressourcen als auch eine flexible und schnelle Anpassung an veränderte betriebliche Rahmenbedingungen ermöglicht, und eine geeignete Implementierung zur Durchführung des Verfahrens anzugeben.

Diese Aufgabe wird erfindungsgemäß durch ein Verfahren mit den in Anspruch 1 angegebenen Merkmalen und durch eine Steuerungseinrichtung mit den in Anspruch 13 angegebenen Merkmalen gelöst. Vorteilhafte Weiterbildungen sind in den abhängigen Ansprüchen angegeben.

Entsprechend dem erfindungsgemäßen Verfahren zum Betrieb eines Kommunikationssystems zur Übermittlung zeitkritischer Daten werden ausgewählte Datagramme Datenströmen zugeordnet und zwischen ersten Kommunikationsgeräten und zweiten Kommunikationsgeräten über zumindest die ersten und zweiten Kommunikationsgeräte umfassende Pfade innerhalb vorgegebener periodischer Zeitintervalle übermittelt. Vorzugsweise werden die vorgegebenen periodischen Zeitintervalle an allen Kommunikationsgeräten synchronisiert. Erfindungsgemäß werden Reservierungsanfragen zur Bereitstellung von Ressourcen für eine Übertragung der Datenströme jeweils an eine Steuerungseinrichtung übermittelt, die dem jeweiligen ersten bzw. zweiten Kommunikationsgerät zugeordnet ist. Dabei werden die Ressourcen durch die von den Pfaden umfassten Kommunikationsgeräte bereitgestellt. Die Steuerungseinrichtung kann insbesondere eine Network Management Engine (NME) sein.

Vorzugsweise sind die ersten Kommunikationsgeräte über ein Time-sensitive Network, insbesondere entsprechend IEEE802.3-2018, IEEE 802.1Q-2018, IEEE 802.1AB-2016, IEEE 802.1AS-2020, IEEE 802.1BA-2011 bzw. IEEE 802.1CB-2017, mit den zweiten Kommunikationsgeräten verbunden. Insbesondere kann eine Weiterleitung der ausgewählten Datagramme mittels Frame Preemption, Time-Aware Shaper, Credit-based Shaper, Burst Limiting Shaper, Peristaltic Shaper bzw. Priority-based gemäß IEEE 802.1Q-2018 gesteuert werden.

Die Steuerungseinrichtung ermittelt bei Reservierungsanfragen für die Datenströme erfindungsgemäß jeweils ein Zeitfenster innerhalb der vorgegebenen Zeitintervalle zur Datenübermittlung sowie eine dem jeweiligen Datenstrom zugeordnete Reihenfolgeposition innerhalb einer dem ermittelten Zeitfenster zugeordneten Sendeliste des jeweiligen ersten Kommunikationsgeräts. Dabei weisen die Zeitfenster jeweils eine Takt-Untersetzung bzw. individuelle Zyklusdauer auf, die ein Vielfaches einer allgemeinen Zyklusdauer ist oder der allgemeinen Zyklusdauer entspricht. Die Steuerungseinrichtung kennzeichnet die Reihenfolgepositionen jeweils durch eine relative bzw. aktualisierte absolute Positionsangabe in Bezug auf bestehende Einträge innerhalb der jeweiligen Sendeliste. Auf diese Weise können bei topologischen Änderungen im Kommunikationssystem oder bei neu hinzukommenden Datenströmen Sortierungen innerhalb der Sendelisten grundsätzlich beliebig angepasst werden. Bei einer aktualisierten absoluten Positionsangabe werden insbesondere Positionsangaben für bestehende Einträge in der jeweiligen Sendeliste angepasst. Vorteilhafterweise werden die Datenströme auf Reservierungsanfragen jeweils bidirektional eingerichtet.

Vorzugsweise übermittelt die Steuerungseinrichtung jeweils bei einem für einen Datenstrom verfügbaren Zeitfenster Informationen über einen Beginn des ermittelten Zeitfensters, über die individuelle Zyklusdauer und über die durch die relative bzw. aktualisierte absolute Positionsangabe gekennzeichnete Reihenfolgeposition an das jeweilige erste Kommunikationsgerät. Dabei werden die Datenströme jeweils entsprechend diesen Informationen übermittelt. Dies ermöglich eine zuverlässige und aufwandsarme Implementierung der vorliegenden Erfindung.

Entsprechend einer bevorzugten Ausgestaltung der vorliegenden Erfindung ermittelt die Steuerungseinrichtung bei Reservierungsanfragen jeweils einen Pfad und überprüft, ob in den Kommunikationsgeräten entlang des jeweils ermittelten Pfades und für das ermittelte Zeitfenster ausreichende Ressourcen für die Übertragung der Datenströme unter Einhaltung angegebener Dienstgüteparameter verfügbar sind. Dies ermöglicht eine einfache und effiziente Stream-Reservierung. Die Reservierungsanfragen umfassen dabei insbesondere jeweils zumindest Angaben zu ersten und zweiten Kommunikationsgeräten und Dienstgüteparametern.

Vorteilhafterweise überprüft die Steuerungseinrichtung bei Reservierungsanfragen für die Datenströme jeweils, ob in den Kommunikationsgeräten ausreichende Ressourcen für die Übertragung bestehender Datenströme und für die Übertragung des entsprechend der jeweiligen Reservierungsanfrage zu übermittelnden Datenstroms verfügbar sind. Somit kann sichergestellt werden, dass Reservierungen für bestehende Datenströme nicht nachteilig durch hinzukommende Datenströme beeinflusst werden. Die durch die Kommunikationsgeräte bereitzustellenden Ressourcen können beispielsweise nutzbare Übertragungszeitfenster, Bandbreite, zugesicherte maximale Latenz, Queue-Anzahl, Queue-Cache bzw. Adress-Cache in Switches oder Bridges umfassen. Dies ermöglicht eine umfassende Berücksichtigung von Dienstgüteparametern bei der Stream-Reservierung.

Die Steuerungseinrichtung übermittelt entsprechend einer weiteren Ausgestaltung der vorliegenden Erfindung bei ausreichenden Ressourcen jeweils Konfigurationsinformationen an die Kommunikationsgeräte, die vom jeweiligen Pfad umfasst sind. Vorteilhafterweise werden die Kommunikationsgeräte jeweils entsprechend den übermittelten Konfigurationsinformationen zur Bereitstellung der Ressourcen für die Übertragung der Datenströme eingerichtet. Die Reservierungsanfragen können beispielsweise jeweils durch eine Reservierungsfunktionskomponente, die dem jeweiligen ersten oder zweiten Kommunikationsgerät oder einem mit diesem verbundenen Datagramme weiterleitenden Kommunikationsgerät zugeordnet ist, an die Steuerungseinrichtung übermittelt werden.

Die erfindungsgemäße Steuerungseinrichtung ist zur Durchführung eines Verfahrens entsprechend vorangehenden Ausführungen geeignet und umfasst zumindest einen Port zur Verbindung mit einem Datagramme weiterleitenden Kommunikationsgerät. Die Steuerungseinrichtung ist dafür ausgestaltet und eingerichtet, Reservierungsanfragen zur Bereitstellung von Ressourcen für eine Übertragung von Datenströmen zu empfangen. Dabei werden die Datenströme zwischen ersten Kommunikationsgeräten und zweiten Kommunikationsgeräten über zumindest die ersten und zweiten Kommunikationsgeräte umfassende Pfade innerhalb vorgegebener periodischer Zeitintervalle übermittelt. Die Ressourcen werden durch die von den Pfaden umfassten Kommunikationsgeräte bereitgestellt.

Außerdem ist die erfindungsgemäße Steuerungseinrichtung dafür ausgestaltet und eingerichtet, bei Reservierungsanfragen für die Datenströme jeweils ein Zeitfenster innerhalb der vorgegebenen Zeitintervalle zur Datenübermittlung sowie eine dem jeweiligen Datenstrom zugeordnete Reihenfolgeposition innerhalb einer dem ermittelten Zeitfenster zugeordneten Sendeliste des jeweiligen ersten Kommunikationsgeräts zu ermitteln. Dabei weisen die Zeitfenster jeweils eine individuelle Zyklusdauer auf, die ein Vielfaches einer allgemeinen Zyklusdauer ist oder der allgemeinen Zyklusdauer entspricht. Darüber hinaus ist die Steuerungseinrichtung dafür ausgestaltet und eingerichtet, die Reihenfolgepositionen jeweils durch eine relative bzw. aktualisierte absolute Positionsangabe in Bezug auf bestehende Einträge innerhalb der jeweiligen Sendeliste zu kennzeichnen.

Die vorliegende Erfindung wird nachfolgend an einem Ausführungsbeispiel anhand der Zeichnung näher erläutert. Es zeigt
- Figur 1: ein mehrere Kommunikationsgeräte umfassendes Kommunikationssystem für ein industrielles Automatisierungssystem,
- Figur 2: eine schematische Darstellung von Zeitfenstern zur Übermittlung von Datenströmen, wobei die Zeitfenster jeweils eine individuelle Zyklusdauer aufweisen können, die ein Vielfaches einer allgemeinen Zyklusdauer ist,
- Figur 3: ein Ablaufdiagramm für eine Reservierung von Ressourcen zur Übermittlung von Datenströmen innerhalb des Kommunikationssystems gemäß Figur 1.

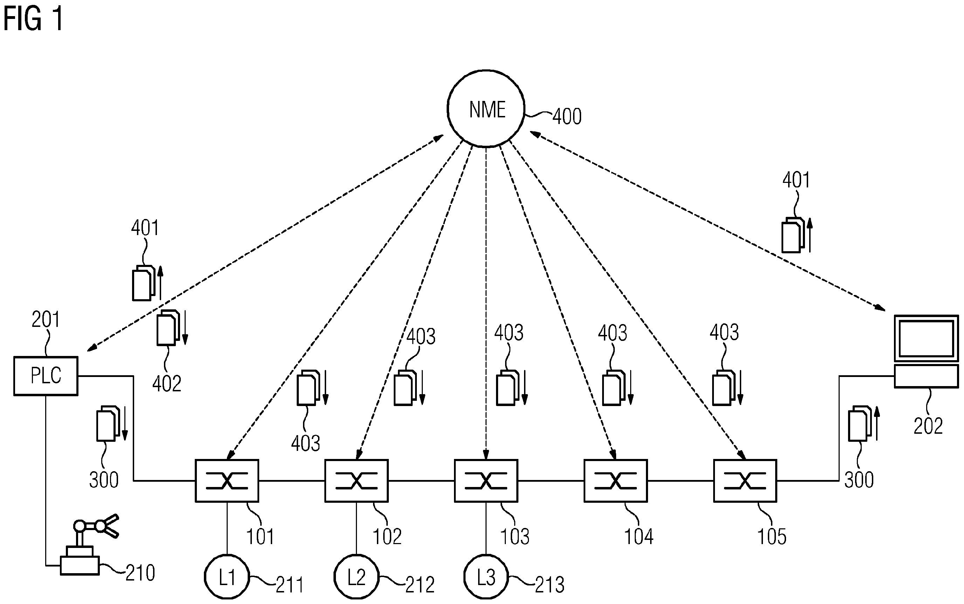

Das in Figur 1 dargestellte Kommunikationssystem für ein industrielles Automatisierungssystem umfasst mehrere in einer Linientopologie angeordnete Bridges bzw. Switches 101-105 als Datagramme weiterleitende Kommunikationsgeräte, eine diesen zugeordnete Steuerungseinrichtung bzw. Network Management Engine 400 sowie mehrere an die Switches 101-105 angeschlossene Kommunikations- bzw. Kommunikationsendgeräte 201-202, 211-213. Die Network Management Engine 400 weist zumindest einen Port zur Verbindung mit einem Switch 101-105 auf.

Die Switches 101-105 umfassen jeweils mehrere Ports sowie einen Backplane-Switch als Koppelelement und dienen insbesondere zum Anschluss von speicherprogrammierbaren Steuerungen 201, Bedien- und Beobachtungsstationen 202, I/O-Controllern oder I/O-Modulen, die ebenfalls Kommunikationsgeräte bzw. Kommunikationsendgeräte darstellen. Im vorliegenden Ausführungsbeispiel ist das Kommunikationssystem als Time-Sensitive Network ausgestaltet, insbesondere entsprechend IEEE802.3-2018, IEEE 802.1Q-2018, IEEE 802.1AB-2016, IEEE 802.1AS-2011, IEEE 802.1BA-2011 bzw. IEEE 802.1CB-2017. Eine Weiterleitung von Datenrahmen (Frames) innerhalb des Kommunikationssystems kann beispielsweise mittels Frame Preemption gemäß IEEE 802.1Q-2018, Time-Aware Shaper gemäß IEEE 802.1Q-2018, Credit-based Shaper gemäß IEEE 802.1Q-2018, Burst Limiting Shaper, Peristaltic Shaper bzw. Priority-based gesteuert werden.

Speicherprogrammierbare Steuerungen 201 umfassen typischerweise jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul kann eine speicherprogrammierbare Steuerung 201 mit einem Switch oder Router oder zusätzlich mit einem Feldbus verbunden werden. Die Eingabe/Ausgabe-Einheit dient einem Austausch von Steuerungs- und Messgrößen zwischen der speicherprogrammierbaren Steuerung 201 und einer durch die speicherprogrammierbare Steuerung 201 gesteuerten Maschine oder Vorrichtung 210. Die Zentraleinheit ist insbesondere für eine Ermittlung geeigneter Steuerungsgrößen aus erfassten Messgrößen vorgesehen. Obige Komponenten der speicherprogrammierbaren Steuerung 201 sind beispielsweise über ein Rückwandbus-System miteinander verbunden.

Zum Austausch von Steuerungs- und Messgrößen mit angeschlossenen Maschinen oder Vorrichtungen können grundsätzlich auch I/O-Module vorgesehen sein. Eine Steuerung von I/O-Modulen kann insbesondere mittels eines I/O-Controllers pro Automatisierungszelle erfolgen. Alternativ hierzu können I/O-Module auch durch eine entfernte speicherprogrammierbare Steuerung angesteuert werden.

Eine Bedien- und Beobachtungsstation 202 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 202 zur Anzeige von Werten eines Regelungskreises und zur Veränderung von Regelungsparametern verwendet. Bedien- und Beobachtungsstationen 202 umfassen zumindest eine graphische Benutzerschnittstelle, ein Eingabegerät, eine Prozessoreinheit und ein Kommunikationsmodul.

Mittels erster Kommunikations- bzw. Automatisierungsgeräte, die insbesondere eine Talker- oder Provider Funktion haben, werden Informationen bzw. Dienste über Datenströme zur Nutzung an zweiten Kommunikations- bzw. Automatisierungsgeräten bereitgestellt, die insbesondere eine Listener- oder Consumer-Funktion haben. Einem Automatisierungsgerät kann gleichzeitig sowohl eine oder mehrere Talker-Funktionen als auch eine oder mehrere Listener-Funktionen haben, beispielsweise wenn es einerseits Automatisierungsdienste bereitstellt und andererseits Automatisierungsdienste anderer Geräte nutzt. Aus diesem Grund werden Datenströme auf Reservierungsanfragen im vorliegenden Ausführungsbeispiel vorzugsweise jeweils bidirektional eingerichtet.

Die speicherprogrammierbare Steuerung 201 kann beispielsweise Messwerte liefern und somit eine Talker-Funktion haben. Dagegen kann die Bedien- und Beobachtungsstation 202 eine Listener-Funktion aufweisen und insbesondere durch die speicherprogrammierbare Steuerung 201 bereitgestellte Informationen empfangen. Im vorliegenden Ausführungsbeispiel weisen auch die Kommunikationsendgeräte 211-213 eine Listener-Funktion auf.
Grundsätzlich könnte die Bedien- und Beobachtungsstation 202 von der speicherprogrammierbaren Steuerung 201 empfangene Informationen analysieren und hieraus Steuerungsparameter für die speicherprogrammierbare Steuerung 201 vorgeben. Somit können sowohl die speicherprogrammierbare Steuerung 201 als auch die Bedien- und Beobachtungsstation 202 beide Funktionen wahrnehmen.

Zur Übermittlung zeitkritischer Daten werden zumindest ausgewählte Datenrahmen (Frames) 300 Datenströmen zugeordnet und zwischen ersten Kommunikationsgeräten 201 und zweiten Kommunikationsgeräten 202, 211-213 über zumindest die ersten und zweiten Kommunikationsgeräte 201-202, 211-213 umfassende Pfade innerhalb vorgegebener periodischer Zeitintervalle übermittelt. Vorzugsweise werden die vorgegebenen periodischen Zeitintervalle an allen Kommunikationsgeräten 101-105, 201-202, 211-213 synchronisiert. Im vorliegenden Ausführungsbeispiel stellt die speicherprogrammierbare Steuerung 201 ein erstes Kommunikationsgerät mit Talker-Funktion dar, während die Bedien- und Beobachtungsstation 202 sowie die Kommunikationsendgeräte 211-213 jeweils ein zweites Kommunikationsgerät mit Listener-Funktion darstellen.

Reservierungsanfragen 401 zur Bereitstellung von Ressourcen für eine Übertragung der Datenströme jeweils an die Network Management Engine 400 übermittelt, die dem jeweiligen ersten bzw. zweiten Kommunikationsgerät 201, 202 zugeordnet ist. Dabei werden die Ressourcen insbesondere durch die von den Pfaden umfassten Switches 101-105 bereitgestellt. Die Reservierungsanfragen umfassen jeweils zumindest Angaben zu ersten und zweiten Kommunikationsgeräten und zu Dienstgüteparametern.

Die Reservierungsanfragen 401 werden beispielsweise durch Talker Announce (TA) Nachrichten zur Bekanntmachung von abonnierbaren Datenströmen sowie durch Listener Ready (LR) Nachtrichten zur Abonnierung verfügbarer Datenströme realisiert.

Die Reservierungsanfragen 401 können insbesondere jeweils durch eine Reservierungsfunktionskomponente, die dem jeweiligen ersten oder zweiten Kommunikationsgerät 201-202, 211-213 oder einem mit diesem verbundenen Switch 101-105 zugeordnet ist, an die Network Management Engine 400 übermittelt werden.

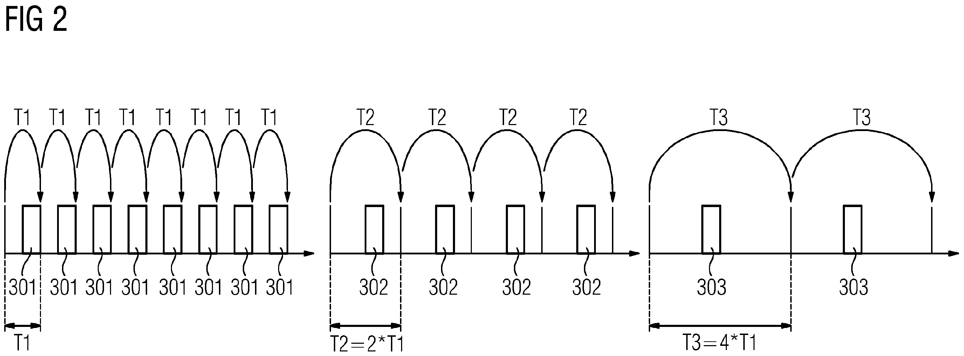

Entsprechend Figur 2 kann für die Datenströme jeweils ein Zeitfenster 301, 302, 303 innerhalb der vorgegebenen Zeitintervalle zur Datenübermittlung vorgegeben werden, wobei die Zeitfenster 302, 303 jeweils eine individuelle Zyklusdauer T2, T3 (Reduction Ratio) aufweisen können, die ein Vielfaches einer allgemeinen netzwerkweiten Zyklusdauer T1 ist. Während beispielsweise netzwerkweit ein allgemeiner Sendezyklus Tl=31,25 µs eingestellt ist, kann für ausgewählte Datenströme ein Sendezyklus T2=62,5 µs bzw. T3=125 µs eingestellt werden. Dementsprechend ändern sich Sendequeue-Belegungsmuster. Für ankommende Datarahmen werden bei einer Weiterleitung durch die Switches 101-105 ursprüngliche Zyklusdauern für die Datenströme beibehalten.

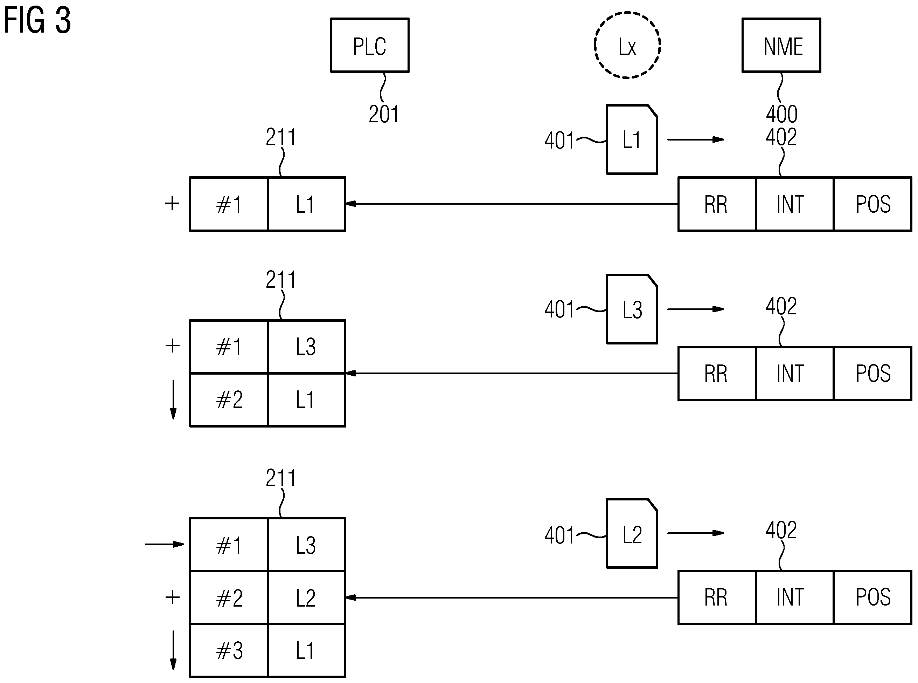

Entsprechend dem in Figur 3 dargestellten beispielhaften Ablaufdiagramm ermittelt die Network Management Engine 400 bei Reservierungsanfragen 401 für die Datenströme jeweils ein Zeitfenster 301-303 innerhalb der vorgegebenen Zeitintervalle zur Datenübermittlung sowie eine dem jeweiligen Datenstrom zugeordnete Reihenfolgeposition innerhalb einer dem ermittelten Zeitfenster 301-303 zugeordneten Sendeliste 211 des jeweiligen Kommunikationsgeräts 201 mit Talker-Funktion. Die Network Management Engine 400 kennzeichnet die Reihenfolgepositionen jeweils durch eine relative bzw. aktualisierte absolute Positionsangabe POS in Bezug auf bestehende Einträge innerhalb der jeweiligen Sendeliste 211.

Wenn für einen Datenstrom ein verfügbares Zeitfenster 301-303 ermittelt werden kann, übermittelt die Network Management Engine 400 jeweils Informationen 402 über einen Beginn INT des ermittelten Zeitfensters 301-303, über die individuelle Zyklusdauer RR und über die durch die relative bzw. aktualisierte absolute Positionsangabe POS gekennzeichnete Reihenfolgeposition an das jeweilige Kommunikationsgerät 201 mit Talker-Funktion. Jeweils entsprechend diesen Informationen werden die Datenströme übermittelt.

Bei einer aktualisierten absoluten Positionsangabe werden Positionsangaben für bestehende Einträge in der jeweiligen Sendeliste 211 angepasst. Im Beispiel gemäß Figur 3 wird bei leerer Sendeliste 211 des Talkers 201 zunächst eine Einrichtung eines Datenstroms vom Talker 201 zum Listener 211 (L1) angefordert, der entsprechend Figur 1 über den Switch 101 mit dem Talker 201 verbunden ist. Entsprechend den von der Network Management Engine 400 übermittelten Informationen 402 wird diesem Datenstrom die erste Reihenfolgeposition innerhalb der Sendeliste 211 des Talkers 201 zugeordnet.

Anschließend wird im vorliegenden Beispiel eine Einrichtung eines Datenstroms vom Talker 201 zum Listener 213 (L3) angefordert, der über die drei Switches 101-103 mit dem Talker 201 verbunden ist. Um eine vorteilhafte Queueing-Strategie zur Latenz-Minimierung zu realisieren, können die Einträge für die Datenströme in der Sendeliste 211 beispielsweise entsprechend einer jeweiligen Hop-Anzahl zwischen Talker und Listener absteigend sortiert werden. Dementsprechend wird dem Datenstrom zum Listener 213 (L3) die Reihenfolgeposition vor dem bisherigen ersten Eintrag, also relativ zum bisherigen ersten Eintrag, innerhalb der Sendeliste 211 zugeordnet.

Schließlich wird im vorliegenden Beispiel eine Einrichtung eines Datenstroms vom Talker 201 zum Listener 212 (L2) angefordert, der über die zwei Switches 101-102 mit dem Talker 201 verbunden ist. Entsprechend obiger durch die Network Management Engine 400 angewendeter Queueing-Strategie dem Datenstrom zum Listener 212 (L2) die Reihenfolgeposition vor dem bisherigen zweiten Eintrag, also relativ zum bisherigen zweiten Eintrag, innerhalb der Sendeliste 211 zugeordnet.

Mit beschriebener Festlegung der Reihenfolgepositionen für die Datenströme können sich aus einmalig festgelegten, nur begrenzt vorrätigen Sequenznummern ergebende Probleme durch eine Liste, insbesondere eine Delta-Liste, mit Einkettungen für neue Datenströme oder bei Topologieänderungen lösen lassen. Somit können jederzeit und je nach Anforderungen beliebige neue Sortierungen durchgeführt werden.

Außerdem ermittelt die Network Management Engine 400 bei Reservierungsanfragen 401 für die Datenströme jeweils einen Pfad und überprüft, ob in den Switches 101-105 entlang des jeweils ermittelten Pfades und für das ermittelte Zeitfenster 301-303 ausreichende Ressourcen für die Übertragung der Datenströme unter Einhaltung der angegebenen Dienstgüteparameter verfügbar sind. Insbesondere überprüft die Network Management Engine 400, ob in den Switches 101-105 ausreichende Ressourcen für die Übertragung bestehender Datenströme und für die Übertragung des entsprechend der jeweiligen Reservierungsanfrage 401 zu übermittelnden Datenstroms verfügbar sind. Die durch die Switches 101-105 bereitzustellenden Ressourcen umfassen beispielsweise nutzbare Übertragungszeitfenster, Bandbreite, zugesicherte maximale Latenz, Queue-Anzahl, Queue-Cache und Adress-Cache.

Bei ausreichenden Ressourcen in den Switches 101-105 übermittelt die Network Management Engine 400 jeweils Konfigurationsinformationen 403 an die Switches 101-105, die vom jeweiligen Pfad umfasst sind. Diese Switches 101-105 werden dann jeweils entsprechend den übermittelten Konfigurationsinformationen 403 zur Bereitstellung der Ressourcen für die Übertragung der Datenströme eingerichtet.

## Patentansprüche

1. Verfahren zum Betrieb eines Kommunikationssystems zur Übermittlung zeitkritischer Daten, bei dem
- ausgewählte Datagramme (300) Datenströmen zugeordnet und zwischen ersten Kommunikationsgeräten (201) und zweiten Kommunikationsgeräten (202, 211-213) über zumindest die ersten und zweiten Kommunikationsgeräte umfassende Pfade innerhalb vorgegebener periodischer Zeitintervalle übermittelt werden,
- Reservierungsanfragen zur Bereitstellung von Ressourcen für eine Übertragung der Datenströme jeweils an eine Steuerungseinrichtung (400) übermittelt werden, die dem jeweiligen ersten und/oder zweiten Kommunikationsgerät zugeordnet ist, wobei die Ressourcen durch die von den Pfaden umfassten Kommunikationsgeräte (101-105) bereitgestellt werden,
- die Steuerungseinrichtung bei Reservierungsanfragen (401) für die Datenströme jeweils ein Zeitfenster (301-303) innerhalb der vorgegebenen Zeitintervalle zur Datenübermittlung sowie eine dem jeweiligen Datenstrom zugeordnete Reihenfolgeposition innerhalb einer dem ermittelten Zeitfenster zugeordneten Sendeliste (211) des jeweiligen ersten Kommunikationsgeräts ermittelt, wobei die Zeitfenster jeweils eine individuelle Zyklusdauer (RR) aufweisen, die ein Vielfaches einer allgemeinen Zyklusdauer (T1) ist oder der allgemeinen Zyklusdauer entspricht,
- die Steuerungseinrichtung die Reihenfolgepositionen jeweils durch eine relative und/oder aktualisierte absolute Positionsangabe (POS) in Bezug auf bestehende Einträge innerhalb der jeweiligen Sendeliste kennzeichnet.

2. Verfahren nach Anspruch 1,
bei dem die Steuerungseinrichtung (400) jeweils bei einem für einen Datenstrom verfügbaren Zeitfenster (301-303) Informationen über einen Beginn (INT) des ermittelten Zeitfensters, über die individuelle Zyklusdauer (RR) und über die durch die relative und/oder aktualisierte absolute Positionsangabe (POS) gekennzeichnete Reihenfolgeposition an das jeweilige erste Kommunikationsgerät (201) übermittelt und bei dem die Datenströme jeweils entsprechend diesen Informationen übermittelt werden.

3. Verfahren nach einem der Ansprüche 1 oder 2,
bei dem die Steuerungseinrichtung (400) bei Reservierungsanfragen für die Datenströme jeweils einen Pfad ermittelt und überprüft, ob in den Kommunikationsgeräten (101-105) entlang des jeweils ermittelten Pfades und für das ermittelte Zeitfenster ausreichende Ressourcen für die Übertragung der Datenströme unter Einhaltung angegebener Dienstgüteparameter verfügbar sind, wobei die Reservierungsanfragen jeweils zumindest Angaben zu ersten und zweiten Kommunikationsgeräten und Dienstgüteparametern umfassen.

4. Verfahren nach Anspruch 3,
bei dem die Steuerungseinrichtung (400) bei ausreichenden Ressourcen jeweils Konfigurationsinformationen an die Kommunikationsgeräte (100) übermittelt, die vom jeweiligen Pfad umfasst sind.

5. Verfahren nach Anspruch 4,
bei dem die Kommunikationsgeräte (101-105) jeweils entsprechend den übermittelten Konfigurationsinformationen zur Bereitstellung der Ressourcen für die Übertragung der Datenströme eingerichtet werden.

6. Verfahren nach einem der Ansprüche 3 bis 5,
bei dem die Steuerungseinrichtung (400) bei Reservierungsanfragen für die Datenströme jeweils überprüft, ob in den Kommunikationsgeräten (101-105) ausreichende Ressourcen für die Übertragung bestehender Datenströme und für die Übertragung des entsprechend der jeweiligen Reservierungsanfrage zu übermittelnden Datenstroms verfügbar sind.

7. Verfahren nach einem der Ansprüche 1 bis 6,
bei dem die Reservierungsanfragen jeweils durch eine Reservierungsfunktionskomponente, die dem jeweiligen ersten oder zweiten Kommunikationsgerät (201-202, 211-213) oder einem mit diesem verbundenen Datagramme weiterleitenden Kommunikationsgerät (101-105) zugeordnet ist, an die Steuerungseinrichtung (400) übermittelt werden.

8. Verfahren nach einem der Ansprüche 1 bis 7,
bei dem die vorgegebenen periodischen Zeitintervalle an allen Kommunikationsgeräten synchronisiert werden.

9. Verfahren nach einem der Ansprüche 1 bis 8,
bei dem die durch die Kommunikationsgeräte bereitzustellenden Ressourcen nutzbare Übertragungszeitfenster, Bandbreite, zugesicherte maximale Latenz, Queue-Anzahl, Queue-Cache und/oder Adress-Cache in Switches oder Bridges umfassen.

10. Verfahren nach einem der Ansprüche 1 bis 9,
bei dem die ersten Kommunikationsgeräte über ein Time-sensitive Network, insbesondere entsprechend IEEE802.3-2018, IEEE 802.1Q-2018, IEEE 802.1AB-2016, IEEE 802.1AS-2011, IEEE 802.1BA-2011 und/oder IEEE 802.1CB-2017, mit den zweiten Kommunikationsgeräten verbunden sind.

11. Verfahren nach Anspruch 10,
bei dem eine Weiterleitung der ausgewählten Datagramme mittels Frame Preemption, Time-Aware Shaper, Credit-based Shaper, Burst Limiting Shaper, Peristaltic Shaper und/oder Priority-based gesteuert wird, insbesondere gemäß IEEE 802.1Q-2018.

12. Verfahren nach einem der Ansprüche 1 bis 11,
bei dem die Datenströme auf Reservierungsanfragen jeweils bidirektional eingerichtet werden.

13. Steuerungseinrichtung zur Durchführung eines Verfahrens nach einem der Ansprüche 1 bis 12 mit
- zumindest einem Port zur Verbindung mit einem Datagramme weiterleitenden Kommunikationsgerät (101-105),
- wobei die Steuerungseinrichtung dafür ausgestaltet und eingerichtet ist, Reservierungsanfragen (401) zur Bereitstellung von Ressourcen für eine Übertragung von Datenströmen zu empfangen, wobei die Datenströme zwischen ersten Kommunikationsgeräten (201) und zweiten Kommunikationsgeräten (202, 211-213) über zumindest die ersten und zweiten Kommunikationsgeräte umfassende Pfade innerhalb vorgegebener periodischer Zeitintervalle übermittelt werden und die Ressourcen durch die von den Pfaden umfassten Kommunikationsgeräte (101-105) bereitgestellt werden,
- wobei die Steuerungseinrichtung dafür ausgestaltet und eingerichtet ist, bei Reservierungsanfragen für die Datenströme jeweils ein Zeitfenster (301-303) innerhalb der vorgegebenen Zeitintervalle zur Datenübermittlung sowie eine dem jeweiligen Datenstrom zugeordnete Reihenfolgeposition innerhalb einer dem ermittelten Zeitfenster zugeordneten Sendeliste des jeweiligen ersten Kommunikationsgeräts zu ermitteln, wobei die Zeitfenster jeweils eine individuelle Zyklusdauer (RR) aufweisen, die ein Vielfaches einer allgemeinen Zyklusdauer (T1) ist oder der allgemeinen Zyklusdauer entspricht,
- wobei die Steuerungseinrichtung dafür ausgestaltet und eingerichtet ist, die Reihenfolgepositionen jeweils durch eine relative und/oder aktualisierte absolute Positionsangabe (POS) in Bezug auf bestehende Einträge innerhalb der jeweiligen Sendeliste zu kennzeichnen.
